# EUROPEAN PATENT APPLICATION

(11) **EP 1 466 794 A1**
(43) Date of publication of application: **13.10.2004**
(21) Application number: 04008029.3
(22) Date of filing: 02.04.2004
(51) Int. Cl.: B60R 21/20

(54) **Reinforcement rib with a diverter for the integral head-bag.**

(30) Priority: 09.04.2003 IT TO20030066 U
(71) Applicant: FIAT AUTO S.p.A., 10135 Torino (IT)
(72) Inventor: Lo Greco, Mario, 10029 Villastellone (TO) (IT)
(74) Representative: Di Francesco, Gianni

(57) **Abstract**

A reinforcement rib (2) for the roof of a motor-vehicle, provided with supports intended to fix a head-bag (5) and provided with an end (6) bent towards the inner part of the passenger compartment the length of said end being such that it surrounds the lower edge of said head bag (5) so that it can expand inside the passenger compartment

## Description

### DESCRIPTION OF THE INVENTION

The present invention refers to the reinforcement rib for the roof of a motor vehicle, on which the security device known as head-bag is mounted, and consisting of a bag that can be inflated in less than ten milliseconds, that is a very short time, in case the vehicle suffers any impact. The inflated bag prevents the head of the passenger from beating against the coating wall of the central upper post or the side window of the motor-vehicle

Problems due to the actual shape of the post and of the rib, sometime make the inflated head-bag become stuck between the framework of the post and its coating.

It is an object of the present invention to provide a rib for the roof of a motor vehicle, the shape of said rib being such that the aforesaid problem can be prevented.

According to the present invention, said object is achieved by means of a reinforcement rib for the roof of a motor-vehicle presenting the characteristics set forth in claim 1.

Additional characteristics and advantages will become evident from the following description referring to the appended drawings provided as non-restrictive example, and in which:
figure 1 is a front view of the connection part between the side post and the rib of the roof of the bodywork,
figure 2 is a side section of a part of the post and of a rib before the modification according to the invention is implemented; and
figure 3 is a side section of a part of the post and of a rib after the modification according to the invention is implemented.

With reference to the figures, reference number 1 indicates the upper part of a side post of the bodywork of a motor-vehicle, and reference number 2 indicates the reinforcement rib of the roof (not shown). Reference number 3 indicates the internal coating of the post and reference number 4 indicates the coating of the roof panel

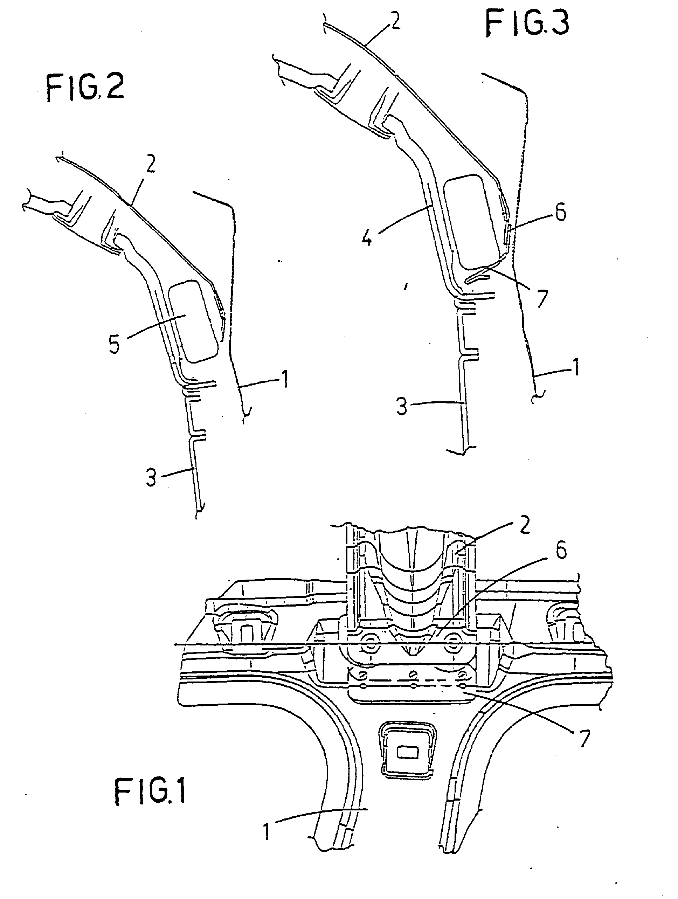

Reference number 5 indicates the head-bag, schematically shown here for clarity sake, fixed to the end of the rib in a way known per se, for example by means of screws. As it can be seen in figure 2, showing a side section of a part of the post and of the rib before the modification is implemented, the extremity of the rib ends at the lower edge of the head-bag, so that this one can expand without finding any obstacle, in the space between the post 1 and its coating 3.

According to the present invention, in order to prevent said unwanted expansion, the final part 6 of the rib 2 has been extended and bent towards the inner part of the motor-vehicle so that the head-bag can no longer expand along the post, being instead forced to expand inside the passenger compartment. As shown in figures 1 and 3, the extension of the rib can be achieved by welding a properly shaped plate 7 to the end of the rib or, if it is possible, by realising a rib of adequate length the final part of which is bent in order to control the expansion of the head-bag. It goes without saying that in case of an integral rib, that is when the plate 7 is integral with the rib, the rib will be mounted on the bodywork in a different way. Previously the rib was to be inserted from above into the bodywork provided with sidewalls already welded to the floor, while now the rib with curved ends shall be inserted from below, passing through the opening of the door in the sidewall. In the example here described, the end of a single rib 2 has been shown yet it is obvious that the extension according to the invention will be implemented on both ribs.

## Claims

1. A reinforcement rib (2) for the roof of a motor-vehicle, the rib being provided with supports intended to fix a head-bag (5) **characterised in that** it presents an end (6) bent towards the inner part of the passenger compartment and that its length is such that it surrounds the lower edge of said head bag (5) so that it can expand inside the passenger compartment.

2. A reinforcement rib (2) as claimed in claim 1 **characterised in that** the end (6) which is bent is integral with said rib.

3. A reinforcement rib (2) for the roof of a motor vehicle, provided with supports to fix a head-bag (5) **characterised in that** it presents an end (6) provided with a diverting plate.

4. A reinforcement rib (2) as claimed in claim 3, **characterised in that** the diverting plate is welded.
